(19) Europäisches Patentamt
European Patent Office
Office européen des brevets

(11) Publication number: **0 457 903 A1**

(12) **EUROPEAN PATENT APPLICATION published in accordance with Art. 158(3) EPC**

(21) Application number: **90900327.9**

(51) Int. Cl.⁵: **C08F 299/00**

(22) Date of filing: **11.12.89**

(86) International application number: **PCT/JP89/01239**

(87) International publication number: **WO 91/09069 (27.06.91 91/14)**

(43) Date of publication of application: **27.11.91 Bulletin 91/48**

(84) Designated Contracting States: **AT BE CH DE ES FR GB IT LI LU NL SE**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **MISHIMA, Takayuki Osaka Works of Sumitomo Electric Industries, Ltd. 1-3, Shimaya**
**1-chome Konohana-ku Osaka-shi Osaka 554(JP)**
Inventor: **OKUDA, Yasuhiro Osaka Works of Sumitomo Electric Industries, Ltd. 1-3, Shimaya**
**1-chome Konohana-ku Osaka-shi Osaka 554(JP)**
Inventor: **NISHIMOTO, Hiroaki Osaka Works of Sumitomo Electric Industries, Ltd. 1-3, Shimaya**
**1-chome Konohana-ku Osaka-shi Osaka 554(JP)**

(74) Representative: **Hansen, Bernd, Dr.rer.nat. et al**
**Hoffmann, Eitle & Partner Patentanwälte**
**Arabellastrasse 4 Postfach 81 04 20**
**W-8000 München 81(DE)**

(54) **PHOTOCURABLE RESIN COMPOSITION AND PLASTIC-CLAD OPTICAL FIBER USING THE SAME.**

(57) An optical fiber which is clad with a cured product of a photocurable resin composition consisting of at least one compound having at least two unsaturated bonds in the molecule, a photopolymerization initiator, and a coupling agent without unsaturated bond which forms a chemical bond with a quartz-type glass or an optical glass. The optical fiber exhibits excellent mechanical properties and does not permit the properties to deteriorate under high temperature conditions.

EP 0 457 903 A1

## FIELD OF THE INVENTION

The present invention relates to a photosetting resin composition and a plastic clad optical fiber which has a cladding made of a cured material of said composition and is suitable for preparing an optical branching device such as an optical fiber star coupler and an optical fiber tap.

## RELATED ART

Hitherto, a silicone resin (Japanese Patent Kokai Publication No. 30703/1983), a polyfluoroalkyl methacrylate copolymer (Japanese Patent Kokai Publication No. 66706/1986) and a vinylidene fluoride/tetrafluoroethylene copolymer (Japanese Patent Publication (Kokoku) No. 41966/1981) are known as cladding materials of a plastic clad optical fiber. However, these cladding materials cannot satisfy recent diverse requirements such as decrease of a transmission loss of the optical fiber, high strength of the optical fiber, an easy connection of a connector by a crimp procedure and an formation of an optical branching device. For example, the silicone resin is suitable for forming a mixing part of the optical branching device since the silicone resin can be easily peeled off from a core. However, the silicone resin gives a poor reliability of the connecting part and particularly a crimp type optical connector cannot be used since the mechanical strength is insufficient. Moreover, an NA (numerical aperture) of the fiber highly depends on a temperature and a transmission loss at a low temperature is high since a linear expansion coefficient is large. When a vinylidene fluoride/tetrafluoroethylene copolymer is used, the optical fiber cannot have a low loss since the copolymer has poor transparency. When a polyfluoroalkyl methacrylate copolymer is used, the retention strength between the fiber and the crimp type connector is significantly deteriorated at a high temperature since the copolymer has a low softening point in spite of good transparency. Moreover, the NA of the fiber is significantly increased and it is difficult to design optimally an insertion loss of the optical branching device since the resin has a large linear expansion coefficient at a temperature higher than a melting point of the resin.

Recently, a cladding made of an ultraviolet light curing resin composition is proposed as described in Japanese Patent Kokai Publication No. 250047/1987 and U.S. Patent No. 4,707,076. Since such resin composition can have a crosslinked structure by means of the UV light curing, it advantageously has high mechanical strength and an increased production rate of the optical fiber although the prior art optical fibers do not have these advantages. In addition, a cladding material for forming a chemical bond between the core and the cladding by means of a silane compound such as a silane coupling agent is proposed in Japanese Patent Kokai Publication No. 41106/1986 and U.S. Patent No. 4,707,076. In this case, advantageously the optical fiber has high mechanical strength and the light transmission property is only slightly deteriorated at a high temperature and a high humidity since the core chemically bonds to the cladding.

However, since the resin compositions described in these prior art literatures contain a compound which has only one unsaturated bond in a molecule (such as monofunctional acrylate), the cured material has an insufficient crosslinking density. Thus, hardness and heat resistance (a softening temperature) are not sufficiently high in practice, and the optical fiber has significantly deteriorated mechanical properties at a high temperature. In addition, the resin composition swells and significantly softens by moisture at high humidity due to insufficient crosslinking density. In particular, the retention strength between the optical fiber and the crimp type connector is significantly deteriorated at a high temperature or at a high temperature and a high humidity. Further, the optical fiber has disadvantages that the core largely protrudes from a tip end of the connector after leaving the optical fiber at a high temperature or at a high temperature and a high humidity or after subjecting the optical fiber to a heat cycle. Furthermore, a structure in which a plural optical fibers are fixed by a crimp type procedure or a structure in which an optical branching device is connected to the optical fiber cable by means of a crimp type optical connector has low reliability. The optical fiber has the following problems in addition to the above disadvantages. When a resin which contains a compound for forming a chemical bond with the core is used as the cladding material, the mechanical strength of a part in which a cladding is peeled off is low and it is difficult to prepare a optical branching device having high reliability. It is difficult to peel off the cladding during the formation of the optical branching device and microcracks easily appear on a core surface due to the chemical bond between the core and the cladding resin. When the compound for forming a chemical bond with the core is not used, mechanical properties of the optical fiber are largely deteriorated and the cladding easily peels off from the core during the attachment of a crimp type connector since adherence between the core and the cladding is poor, although the cladding can be easily peeled off and the optical branching device can be easily prepared. In particular, the optical fiber has disadvantages that reliability of a part including a connector part is further deteriorated by leaving it at a high temperature or at a high temperature and a high

humidity or by subjecting it to a heat cycle, and a loss is increased because of the increase of a mismatch of interface between the core and the cladding.

One of reasons for the low melting point of the resin and significant softening of the resin due to swell with the moisture is believed to be attributed to the monofunctional unsaturated compound contained in the resin composition. On the other hand, it seems difficult to satisfy, at the same time, the requirement for the cladding peeling during the preparation of the optical branching device and the requirement for adherence between the core and the cladding in order to provide the optical fiber having good mechanical properties and good optical properties at a high temperature and a high humidity and good properties after the attachment of the crimp type connector.

## SUMMARY OF THE INVENTION

An object of the present invention is to provide a plastic clad optical fiber having good mechanical strength and reliability of an optical transmission property, good mechanical properties, particularly retention strength between a crimp type optical connector and the optical fiber, which are not deteriorated at a high temperature or at a high temperature and a high humidity, good adhesion between the core and the cladding, and less peeling between the core and the cladding during the attachment of a crimp type connector and to provide a plastic clad optical fiber having seldom a mismatch in interface between the core and cladding in a longitudinal direction of the optical fiber, and having the cladding which can be easily peeled off during the assembly of the optical branching device.

## DISCLOSURE OF THE INVENTION

Accordingly, the present invention achieves the above object by using, as the cladding, a photosetting resin composition comprising at least one compound which has at least two unsaturated bonds in a molecule, a photopolymerization initiator, and a coupling agent having no unsaturated bond and forming a chemical bond with quartz glass or optical glass.

The present invention is intended to improve the mechanical strength and the softening point by improving a crosslinking density of the composition and to easily peel off the cladding without damaging the core surface during the formation of an optical branching part simultaneously with maintaining the practically sufficient adherence between the core and the cladding by using, as the cladding material, a composition in which a coupling agent that forms a chemical bond with the core but no chemical bond with components of a mixture is added to the mixture having a decreased wetting amount of water at a high humidity.

The photosetting composition according to the present invention gives a cured material having higher hardness at a normal temperature and a higher softening temperature than the conventional compositions which contain the monofunctional unsaturated compound. Thus, an optical fiber having a cladding made of a cured material of the composition according to the present invention suffers from less deterioration of the retention strength between the fiber and the crimp type connector at a high temperature (at least 85°C) than the conventional optical fibers. In addition, the core protrusion from a tip end of the connector is small after leaving the fiber at a high temperature or at a high temperature and a high humidity or after subjecting the fiber to a heat cycle. Further, an adherence and a wetting property between the core and the cladding are improved in comparison with a composition which does not contain the coupling agent that forms a chemical bond with the core. The fiber has good initial properties of mechanical strength and transmission loss of the optical fiber immediately after drawing the optical fiber, and the mechanical strength and the transmission loss are only slightly deteriorated after leaving the fiber at a high temperature or at a high temperature and a high humidity or after subjecting the fiber to a heat cycle. The cladding does not peel off from the core when a crimp type connector is attached within an elastic limit of the cladding material.

Since the coupling agent which forms a chemical bond with the core does not form a covalent bond with other components of the cladding material, the cladding can be partially removed without damaging the core.

The term "unsaturated bond" is used to mean a carbon-carbon double bond and includes an acryl group and a methacryl group which have good reactivity in addition to a vinyl group and an allyl group. A refractive index of the cured material of the composition should be smaller than that of a core so that the cured material of the composition functions as the cladding. To this end, a compound contained in the composition according to the present invention may have a fluorine atom.

The composition according to the present invention preferably has a viscosity of 100 to 10,000 cps so that the composition having a thin thickness of 1 to 100 μm is homogeneously coated on the glass core.

Accordingly, the composition according to the present invention preferably contains a prepolymerized polymer which has a suitable polymerization degree in addition to a monomer. Such polymer is not limited, provided that it can be crosslinked by UV light irradiation.

Typical examples of the polymer is a copolymer which comprises a repeating unit of the formula:

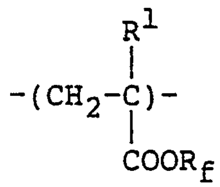

(I)

wherein $R^1$ is a hydrogen atom or a methyl group, and $R_f$ is a fluoroalkyl group,
and a repeating unit having an unsaturated bond. The polymer includes, for example, a (meth)acrylate copolymer having an unsaturated bond in an ester side chain and a number average molecular weight of 50,000 to 5,000,000 (as converted to polystyrene) of the formula:

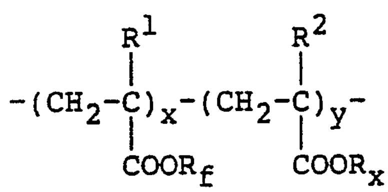

(II)

wherein $R^1$ and $R^2$ are each a hydrogen atom or a methyl group,
$R_f$ is a fluoroalkyl group, and
$R_x$ is a hydrocarbon group having an unsaturated bond.

The $R_x$ group includes a vinyl group, an allyl group, an acryl group, a methacryl group and an internal olefin.

The $R_f$ group includes

$-(CH)_a-(CF_2)_b-CF_3$

wherein a is 1 or 2 and b is from 2 to 6.

A third component may be copolymerized in such copolymer so as to improve the thermal resistance. Specific examples of the third component are isobornyl (meth)acrylate, dicyclopentanyl (meth)acrylate and adamantyl (meth)acrylate.

A polymer which may be contained in the composition includes polyurethane (meth)acrylate such as a polymer of the following formula. Such polymer may contain a fluorine atom so as to obtain a suitable refractive index.

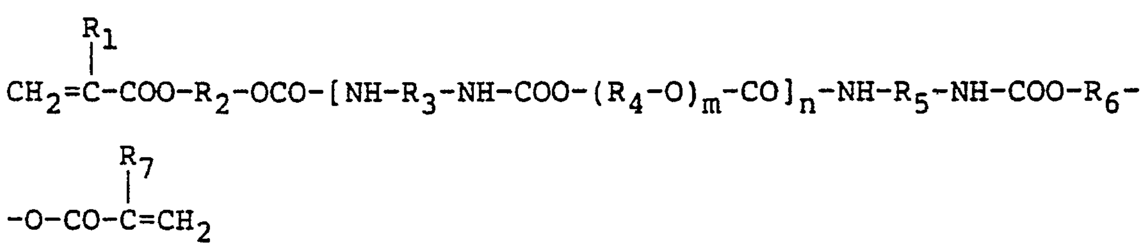

wherein $R_1$ and $R_7$ each is a hydrogen atom or a methyl group, and $R_2$, $R_3$, $R_4$, $R_5$ and $R_6$ each is, the same or different, an alkyl or a fluoroalkyl group.

A compound having at least two (meth)acryloyl groups in a molecule includes the following compounds:

1,4-Butanediol di(meth)acrylate, ethylene glycol di(meth)acrylate, glycerol dimethacrylate, tetraethylene glycol di(meth)acrylate, diethylene glycol di(meth)acrylate, 1,3-butylene glycol di(meth)acrylate, neopentyl glycol di(meth)acrylate, triethylene glycol di(meth)acrylate, triglycerol diacrylate, 1,6-hexanediol di(meth)-

acrylate, tripropylene glycol diacrylate, trimethylolpropane tri(meth)acrylate, pentaerythritol triacrylate, pentaerythritol tetra(meth)acrylate, ditrimethylolpropane tetracrylate, dipentaerythritol hexacrylate, KAYARAD (trade name) MANDA manufactured by Nihon Kayaku Kabushiki Kaisha, and KAYARAD R-604.

A compound having at least two unsaturated bonds in a molecule and further having a fluorine atom includes a compound of the formula:

$$(CH_2{=}\overset{\displaystyle R^1}{\overset{|}{C}}{-}COO)_n{-}R_f \qquad (III)$$

wherein $R^1$ and $R_f$ are the same as defined above, and n is a number of at least two, preferably 2 to 5. It is preferably a compound of the formula:

$$CH_2{=}\overset{\displaystyle R^1}{\overset{|}{C}}COO(CH_2)_p(CF_2)_q(CH_2)_pOO\overset{\displaystyle R^2}{\overset{|}{C}}{=}CH_2 \qquad (IV)$$

wherein $R^1$ and $R^2$ are the same as defined above,
p is 1 or 2, and
q is an integer of 2 to 6.

Values of p and q are selected in accordance with necessary properties such as a refractive index, toughness and a viscosity of the composition.

Types and a composition ratio of these compounds which form the composition may be selected to give necessary properties of the cured material. The composition preferably has a viscosity of 100 to 10,000 cps before curing. The cured material of the composition preferably has a breaking strength of at least 1.0 kg/mm$^2$, Young's modulus of at least 10 kg/mm$^2$, an elongation at break of at least 10 %, a refractive index of at most 1.44 and a light transmittance (thickness: 0.1 mm) of at least 90 % at a wavelength of 850 nm.

The photopolymerization initiator is preferably a compound which easily generates a free radical through UV light irradiation and includes the following compounds:

Benzophenone, acetophenone, benzil, benzoin, benzoin methyl ether, benzoin isobutyl ether, benzyl dimethyl ketal, $\alpha,\alpha'$-azobisisobutyronitrile, benzoylperoxide, 1-hydroxycyclohexyl phenyl ketone, 2,2-dimethoxy-2-phenylacetophenone, 2-hydroxy-2-methyl-1-phenylpropan-1-one.

An amount of the initiator is preferably from 0.01 to 10 % by weight.

The coupling agent having no unsaturated bond and contained in the composition according to the present invention means a compound which has a group that can form a chemical bond with quartz glass or optical glass and which has no carbon-carbon double bond.

As described above, when the coupling agent is added, the fiber strength can be improved, the fiber can have the improved retention strength between the crimp type connector and the fiber at a high temperature or at a high temperature and a high humidity, and the core protrusion from the tip end of the connector can be decreased after leaving the fiber at a high temperature or at a high temperature and a high humidity or after subjecting the fiber to a heat cycle. Such coupling agent enables the cladding to partially be peeled without damaging the core, since it does not chemically bond with other components of the cladding material.

Preferably the coupling agent are colorless, transparent and highly compatible with other components of the cladding material. It preferably has substantially the same refractive index as the other components of the cladding material.

Such coupling agent includes a silane coupling agent such as methoxytrimethylsilane, dimethoxydimethylsilane, methyltrimethoxysilane, tetramethoxysilane, ethoxytrimethylsilane, ethyltrimethoxysilane, n-propyltriethoxysilane, n-butyltrimethoxysilane, n-pentyltriethoxysilane, n-hexyltrimethoxysilane, n-dodecyltriethylsilane and n-octadecyltriethoxysilane.

The coupling agent preferably has a fluorine atom or an ester group in a molecule so as to improve the compatibility with the other components of the cladding material. Such coupling agent includes dimethoxymethyl-3,3,3-trifluoropropylsilane, 3,3,3-trifluoropropyltrimethoxysilane and 3-trifluoroacetoxypropyltrimethoxysilane.

When the composition according to the present invention is used as the cladding of the plastic clad optical fiber, the composition may be coated on the core of the quartz glass or optical glass by, for example, a die coating or spray coating method and then cured by irradiating it with active light such as UV light. An irradiation amount is selected dependent on types and amounts of the compounds contained in the composition.

## EXAMPLES

The polymer (I), (II), (III) or (IV) was used as a polymer having at least two unsaturated bonds in a molecule. Compositions for the cladding material were prepared by mixing these polymers with the compounds indicated in Table 1 in indicated proportions. An amount in Table 1 is in part by weight.

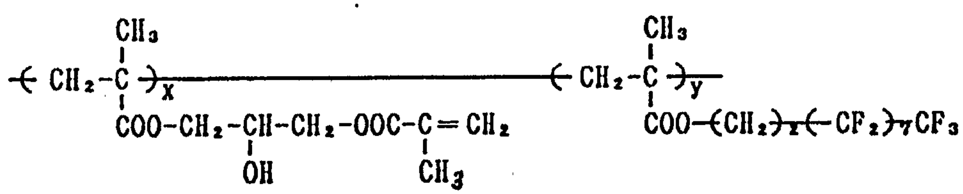

x:y = 1:9 (I)

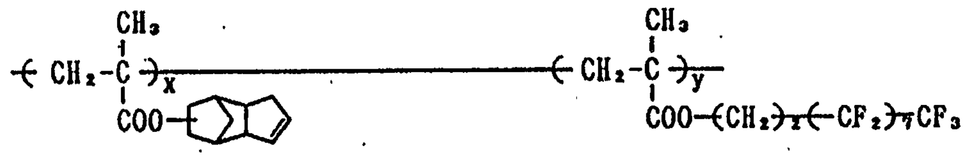

x:y = 1:9 (II)

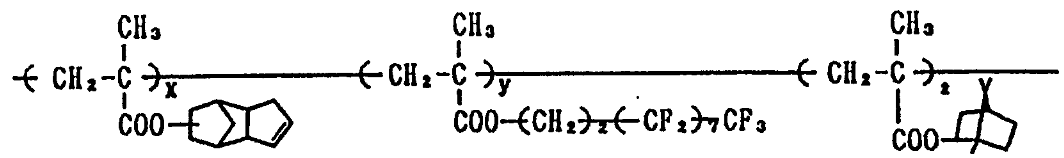

x:y:z = 1:8:1 (III)

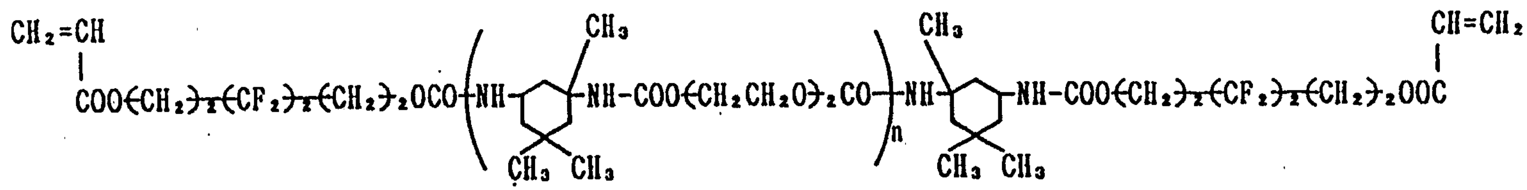

(IV)

Table 1

| Cladding material No. | | 1 | 2 | 3 | 4 | 5 | 6 | 7 | 8 | 9 | 10 |
|---|---|---|---|---|---|---|---|---|---|---|---|
| Polymer | (I) | 10 | – | – | – | 10 | – | – | – | 10 | – |
| | (II) | – | 10 | – | – | – | 10 | – | – | – | 10 |
| | (III) | – | – | 10 | – | – | – | 10 | – | – | – |
| | (IV) | – | – | – | 10 | – | – | – | 10 | – | – |
| $CH_2=CHCOO(CH_2)_2(CF_2)_7CF_3$ | | 65 | 65 | 65 | 65 | 66 | 64 | 64 | 65 | – | – |
| $CH_2=CHCOOCH_2(CF_2)_6-$<br>$CH_2OCOCH=CH_2$ | | – | – | – | – | – | – | – | – | 65 | 65 |
| $CH_2=CHCOO(CH_2)_2(CF_2)_6-$<br>$(CH_2)_2OCOCH=CH_2$ | | – | – | – | – | – | – | – | – | – | – |
| $CH_2=CHCOO(CH_2)_2(CF_2)_5-$<br>$(CH_2)_2OCOCH=CH_2$ | | – | – | – | 15 | – | – | – | 14 | – | – |
| $CH_2=CHCOO(CH_2)_2(CF_2)_4-$<br>$(CH_2)_2OCOCH=CH_2$ | | – | – | – | 5 | – | – | – | 4 | – | – |
| $CH_2=CHCOO(CH_2)_2(CF_2)_3-$<br>$(CH_2)_2OCOCH=CH_2$ | | – | – | – | – | – | – | – | – | – | – |
| $CH_3$<br>$CH_2=CHCOOCH_2CCH_2OCOCH=CH_2$<br>$CH_3$ | | 15 | 15 | 15 | – | 14 | 15 | 15 | – | 15 | 15 |
| $CH_3CH_2C-(-CH_2OCOCH=CH_2)_3$ | | 5 | 5 | 5 | – | 3 | 4 | 4 | – | 5 | 5 |
| 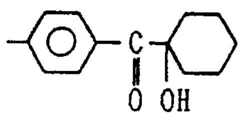 | | 5 | – | 5 | 5 | 5 | – | 5 | 5 | 5 | – |
| 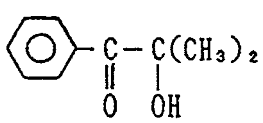 | | – | 5 | – | – | – | 5 | – | – | – | 5 |
| $CH_2=CH-Si(OCH_3)_3$ | | – | – | – | – | 2 | 2 | 2 | 2 | – | – |
| O<br>‖<br>$CF_3CO(CH_2)_3Si(OCH_3)_3$ | | – | – | – | – | – | – | – | – | – | – |

Table 1 (continued)

| Cladding material No. | | 11 | 12 | 13 | 14 | 15 | 16 | 17 | 18 | 19 | 20 |
|---|---|---|---|---|---|---|---|---|---|---|---|
| Polymer | (I) | — | — | 10 | — | — | — | 9 | — | — | — |
| | (II) | — | — | — | 10 | — | — | — | 11 | — | — |
| | (III) | 10 | — | — | — | 10 | — | — | — | 10 | — |
| | (IV) | — | 10 | — | — | — | 10 | — | — | — | 10 |
| $CH_2=CHCOO(CH_2)_2(CF_2)_7CF_3$ | | — | — | — | — | — | — | — | — | — | — |
| $CH_2=CHCOOCH_2(CF_2)_8-CH_2OCOCH=CH_2$ | | 64 | — | 66 | 64 | 64 | — | 67 | 63 | 64 | — |
| $CH_2=CHCOO(CH_2)_2(CF_2)_8-(CH_2)_2OCOCH=CH_2$ | | — | 35 | — | — | — | 35 | — | — | — | 35 |
| $CH_2=CHCOO(CH_2)_2(CF_2)_5-(CH_2)_2OCOCH=CH_2$ | | — | 30 | — | — | — | 30 | — | — | — | 30 |
| $CH_2=CHCOO(CH_2)_2(CF_2)_4-(CH_2)_2OCOCH=CH_2$ | | — | 15 | — | — | — | 14 | — | — | — | 14 |
| $CH_2=CHCOO(CH_2)_2(CF_2)_3-(CH_2)_2OCOCH=CH_2$ | | — | 5 | — | — | — | 4 | — | — | — | 4 |
| 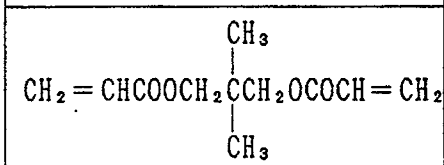 | | 16 | — | 14 | 15 | 15 | — | 14 | 15 | 15 | — |
| $CH_3CH_2C\text{—}(CH_2OCOCH=CH_2)_3$ | | 5 | — | 3 | 4 | 4 | — | 3 | 4 | 4 | — |
| 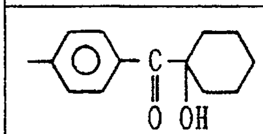 | | 5 | 5 | 5 | — | 5 | 5 | 5 | — | 5 | 5 |
| 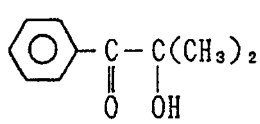 | | — | — | — | 5 | — | — | — | 5 | — | — |
| $CH_2=CH-Si(OCH_3)_3$ | | — | — | 2 | 2 | 2 | 2 | — | — | — | — |
| 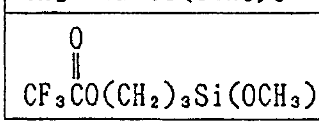 | | — | — | — | — | — | — | 2 | 2 | 2 | 2 |

Immediately after drawing a quartz rod into a fiber having an outer diameter of 200 µm, the resin composition was coated on the fiber and then cured with UV light in a nitrogen atmosphere to obtain an optical fiber having an outer diameter of 230 µm. An ethylene/tetrafluoroethylene copolymer having an outer diameter of 500 µm was extrusion coated on the optical fiber, and then KEVLAR® was longitudinally lapped on the fiber. Then, polyvinyl chloride having an outer diameter of 2.2 mm was loosely extrusion coated on

the fiber to obtain an optical fiber cord.

The cladding was partially peeled off circumferentially in a longitudinally intermediate part of the optical fiber by using a half die having an aperture having a diameter about 5 μm larger than that of the core. Then, the cladding material remained in the peeled part was fully removed by means of a gauze wetted with acetone to obtain an optical fiber sample with a partially exposed core. Exposed parts in two optical fiber samples were closely placed side by side. A resin having the same composition as the cladding of each optical fiber sample was coated on whole surfaces of the exposed parts and the resin was fully cured by a UV irradiation to obtain an optical branching device having an input number of 2 and an output number of 2.

Table 2 shows the properties when a crimp type optical connector is connected with the optical fiber and the optical fiber cord, a peeling property of the cladding during preparing the optical branching device, and properties of the optical branching device.

Table 2

| Cladding material No. | 1 | 2 | 3 | 4 | 5 | 6 | 7 | 8 |
|---|---|---|---|---|---|---|---|---|
| Pull-out strength between connector and fiber *1 | | | | | | | | |
| at 25°C | 1.4 | 1.5 | 1.6 | 1.8 | 1.9 | 1.9 | 2.0 | 2.2 |
| at 85°C | 0.5 | 0.4 | 0.5 | 0.6 | 0.9 | 0.7 | 1.2 | 1.0 |
| Protrusion amount of core (μm) *2 | | | | | | | | |
| after 1000 hr. at 85°C | -4 - +31 | -17 - +19 | -11 - +20 | -15 - +21 | -5 - +10 | -7 - +7 | -4 - +9 | -6 - +10 |
| after 1000 hr. at 85°C, 95 % RH | -61 - +85 | -21 - +40 | -33 - +15 | -20 - +32 | -7 - +12 | -13 - +10 | -10 - +11 | -9 - +10 |
| after 85°C/-40°C heat shock (100 cycles) | -29 - +107 | -35 - +82 | -47 - +19 | -39 - +56 | -11 - +27 | -19 - +12 | -14 - +8 | -17 - +11 |
| Peeling property of cladding *3 | O | O | O | O | X | X | X | X |
| Insertion loss of optical branching device (dB) *4 | 0.1 - 0.6 | 0.4 - 0.5 | 0.2 - 0.7 | 0.3 - 0.7 | | | | |
| Number of breaking of optical branching device fiber after 85°C/-40°C heat shock (100 cycles) *5 | 2 | 3 | 2 | 2 | | | | |

Table 2 (continued)

| Cladding material No. | 9 | 10 | 11 | 12 | 13 | 14 | 15 | 16 | 17 | 18 | 19 | 20 |
|---|---|---|---|---|---|---|---|---|---|---|---|---|
| Pull-out strength between connector and fiber *1 | | | | | | | | | | | | |
| at 25°C | 2.4 | 2.0 | 2.4 | 3.1 | 2.6 | 2.4 | 2.6 | 3.3 | 2.5 | 2.5 | 2.6 | 3.2 |
| at 85°C | 1.6 | 1.3 | 1.6 | 2.2 | 1.7 | 1.7 | 2.0 | 2.3 | 1.7 | 1.5 | 1.9 | 2.3 |
| Protrusion amount of core (μm) *2 | | | | | | | | | | | | |
| after 1000 hr. at 85°C | 0 - +6 | -1 - +9 | -1 - +5 | -1 - +3 | -1 - +3 | 0 - +4 | 0 - +2 | -1 - +2 | 0 - +1 | -1 - +3 | -2 - +2 | 0 - +2 |
| after 1000 hr. at 85°C, 95 % RH | -4 - +6 | -2 - +8 | -3 - +4 | -4 - +5 | -1 - +3 | -2 - +2 | -1 - +2 | -2 - +3 | -3 +2 | 0 - +4 | -2 - +1 | -3 - +4 |
| after 85°C/-40°C heat shock (100 cycles) | -6 - +5 | -5 - +2 | -6 - +7 | -5 - +4 | -1 - +3 | -2 - +3 | -2 - +2 | -2 - +3 | -2 - +2 | -2 - +3 | -1 - +4 | -2 - +2 |
| Peeling property of cladding *3 | O | O | O | O | X | X | X | X | O | O | O | O |
| Insertion loss of optical branching device (dB) *4 | 0.5 - 0.9 | 0.4 - 0.7 | 0.3 - 1.0 | 0.4 - 0.9 | | | | | 0.2 - 0.4 | 0.1 - 0.7 | 0.1 - 0.6 | 0.2 - 0.6 |
| Number of breaking of optical branching device fiber after 85°C/-40°C heat shock (100 cycles) *5 | 2 | 1 | 0 | 1 | | | | | 0 | 0 | 0 | 0 |

Note)

*1: Pull-out strength between the crimp type connector and the optical fiber cladding

*2: The sample number of each test (n) = 10,

The crimp type connector is attached to the optical fiber cord,

(+) value represents a maximum value of protrusion,

(-) value represents a maximum value of retraction

3*: The optical fiber is wiped with an acetone-impregnated gauze after mechanically peeling the cladding material by means of a die under an ordinary state.

O: the cladding can be easily removed

X: the cladding cannot be removed or the fiber is broken

4*: Insertion loss of the optical branching device

$= P_{in} - P_{out}$ (dB)

(wherein $P_{out}$ (dBm) is a total optical output of two cores of outgoing end fibers and $P_{in}$ (dBm) is an incident light quantity of an incident end fiber when one core among the two cores of the incident end fibers is connected with a light source having a wavelength of 810 nm.)

5*: Each number of samples n = 5

The value indicates the number of samples in which the insertion loss increases by at least 1 dB by the heat shock

In Tables 1 and 2, the cladding material composition Nos. 1 to 8 each is a photosetting resin composition in which a photopolymerization initiator is added to a resin mixture which contains a compound having only one unsaturated bond in a molecule, and the cladding material composition Nos. 9 to 20 each is a photosetting resin composition which comprises a photopolymerization initiator and only a compound having at least two unsaturated bond in a molecule, or a resin composition in which a coupling agent is

added to said composition.

It can be understood that the the optical fiber having the cladding made of the cured material of the latter composition has good mechanical strength and particularly a good retention property between the crimp type optical connector and the fiber in view of values of the pull-out strength between the connector and the fiber and the protrusion amount of the core indicated in Table 2.

In Tables 1 and 2, each of the cladding material composition Nos. 1 to 4 and 9 to 12 is a resin composition which does not contain a coupling agent that forms a chemical bond with a core, and each of the cladding material composition Nos. 5 to 8 and 13 to 20 is a resin composition which contains the coupling agent that forms a chemical bond with a core. It can be understood that the optical fiber having the cladding made of the cured material of the latter composition has good mechanical strength in view of values of the pull-out strength between the connector and the fiber and the protrusion amount of core indicated in Table 2.

Namely, it can be understood from Tables 1 and 2 that the optical fibers having the claddings made of the cured materials of the resin compositions having the cladding material composition Nos. 13 to 20 have good mechanical strength, particularly good retention strength between the crimp type connector and the optical fiber and a decreased deterioration of the retention strength at a high temperature.

Further, in Tables 1 and 2, each of the cladding material composition Nos. 1 to 4 and 9 to 12 is a resin composition which does not contain a coupling agent, each of the cladding material composition Nos. 17 to 20 is a resin composition which contains a coupling agent having no unsaturated bond, and each of the cladding material composition Nos. 5 to 8 and 13 to 16 is a resin composition which contains a coupling agent having an unsaturated bond.

It can be understood that, when the resin composition which contains the coupling agent having an unsaturated bond is used as the cladding material, a peeling property after the curing is deteriorated and a working property during the preparation of an optical branching device is significantly deteriorated and, when the resin composition which contains the coupling agent having no unsaturated bond is used as the cladding material, these problems can be solved without damaging other properties in view of values of the peeling property of the cladding and properties in the optical branching device indicated in Table 2.

EFFECT OF THE INVENTION

As explained above, the optical fiber having the cladding made of the photosetting composition according to the present invention has good mechanical properties and, particularly, low deterioration of properties at a high temperature Namely, a decrease of retention strength between a caulk type connector and the optical fiber is lowered at a high temperature (at least 85°C) and the core protrusion from the tip end of the connector is small after leaving the fiber at a high temperature or at a high temperature and a high humidity or after subjecting the fiber to a heat cycle.

Since a wetting property of the cladding to the core is improved and an adherence between the core and the cladding is improved, strength of the optical fiber is improved and the cladding hardly peels from the core during the attachment of an crimp type connector.

Further, a part of the cladding can be peeled by a simple procedure without damaging a core surface. Accordingly, the preparation of the mixing part of the optical branching device is simplified and the preparation of a highly reliable optical fiber star coupler and the assembly of a fiber tap for connecting a branch line fiber to a main line fiber are simplified by using the optical fiber according to the present invention.

## Claims

1. A photosetting resin composition comprising at least one compound which has at least two unsaturated bonds in a molecule, a photopolymerization initiator, and a coupling agent having no unsaturated bond and forming a chemical bond with quartz glass or optical glass.

2. The photosetting resin composition according to claim 1, wherein the compound having at least two unsaturated bonds in a molecule is a copolymer which comprises a repeating unit of the formula:

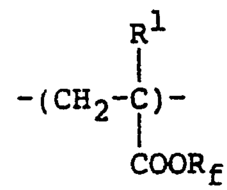

wherein $R^1$ is a hydrogen atom or a methyl group, and
$R_f$ is a fluoroalkyl group,
and a repeating unit having an unsaturated bond.

3. The photosetting resin composition according to claim 1, wherein the compound having at least two unsaturated bonds in a molecule is a compound of the formula:

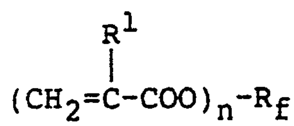

wherein $R^1$ is a hydrogen atom or a methyl group,
$R_f$ is a fluoroalkyl group, and
n is a number of at least two.

4. The photosetting resin composition according to claim 1, wherein the compound having at least two unsaturated bonds in a molecule has at least one urethane linkage in a molecule.

5. The photosetting resin composition according to claim 1, wherein the coupling agent is 3-trifluoroacetoxypropyltrimethoxysilane or n-pentyltriethoxysilane.

6. A plastic clad optical fiber comprising a core made of quartz glass or optical glass and a cladding made of a plastic material having a refractive index smaller than that of the core, characterized in that the cladding is made of a cured material of a photosetting resin composition comprising at least one compound which has at least two unsaturated bonds in a molecule, a photopolymerization initiator, and a coupling agent having no unsaturated bond and forming a chemical bond with quartz glass or optical glass.

7. The plastic clad optical fiber according to claim 6, wherein the compound having at least two unsaturated bonds in a molecule which is contained in the photosetting resin composition is a copolymer which comprises a repeating unit of the formula:

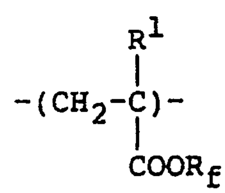

wherein $R^1$ is a hydrogen atom or a methyl group, and
$R_f$ is a fluoroalkyl group,
and a repeating unit having an unsaturated bond.

8. The plastic clad optical fiber according to claim 6, wherein the compound having at least two unsaturated bonds in a molecule which is contained in the photosetting resin composition is a compound of the formula:

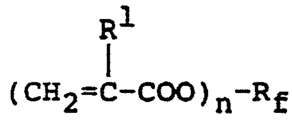

wherein $R^1$ is a hydrogen atom or a methyl group,
$R_f$ is a fluoroalkyl group, and
n is a number of at least two.

**9.** The plastic clad optical fiber according to according to claim 6, wherein the compound having at least two unsaturated bonds in a molecule which is contained in the photosetting resin composition has at least one urethane linkage in a molecule.

**10.** A optical branching device having a mixing part prepared by optically connecting together cores of plural optical fibers through a removal of a part of a cladding of the optical fiber, characterized in the optical fiber according to claim 6 is used as the optical fiber.

# INTERNATIONAL SEARCH REPORT

International Application No PCT/JP89/01239

**I. CLASSIFICATION OF SUBJECT MATTER** (if several classification symbols apply, indicate all)[6]

According to International Patent Classification (IPC) or to both National Classification and IPC

Int. $Cl^5$ C08F299/00

**II. FIELDS SEARCHED**

Minimum Documentation Searched

| Classification System | Classification Symbols |
|---|---|
| IPC | C08F299/00 - 299/08, G02B6/00 |

Documentation Searched other than Minimum Documentation to the Extent that such Documents are Included in the Fields Searched[8]

| | |
|---|---|
| Jitsuyo Shinan Koho | 1947 - 1989 |
| Kokai Jitsuyo Shinan Koho | 1973 - 1989 |

**III. DOCUMENTS CONSIDERED TO BE RELEVANT**[9]

| Category* | Citation of Document,[11] with indication, where appropriate, of the relevant passages[12] | Relevant to Claim No.[13] |
|---|---|---|
| X | JP, A, 61-185572 (The Furukawa Electric Co., Ltd.), 19 August 1986 (19. 08. 86), (Family: none) | 1 - 10 |
| X | JP, A, 61-4715 (Nippon Kayaku Co., Ltd.), 10 January 1986 (10. 01. 86), (Family: none) | 1 - 10 |
| X | JP, A, 62-216946 (Nippon Paint Co., Ltd.), 24 September 1987 (24. 09. 87), (Family: none) | 1 - 10 |
| X | JP, A, 62-96508 (Sumitomo Chemical Co., Ltd.), 6 May 1987 (06. 05. 87), (Family: none) | 1 - 10 |

* Special categories of cited documents:[10]
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step
- "Y" document of particular relevance; the claimed invention cannot be considered to involve an inventive step when the document is combined with one or more other such documents, such combination being obvious to a person skilled in the art
- "&" document member of the same patent family

**IV. CERTIFICATION**

| Date of the Actual Completion of the International Search | Date of Mailing of this International Search Report |
|---|---|
| February 21, 1990 (21. 02. 90) | March 12, 1990 (12. 03. 90) |
| **International Searching Authority** | **Signature of Authorized Officer** |
| Japanese Patent Office | |